# EUROPEAN PATENT APPLICATION

(11) **EP 2 741 249 A1**
(43) Date of publication of application: **11.06.2014**
(21) Application number: 12195474.7
(22) Date of filing: 04.12.2012
(51) Int. Cl.: G06Q 30/02, G06Q 50/00

(54) **Method and device for optimizing information diffusion between communities linked by interaction similarities**

(71) Applicant: Alcatel Lucent, 75007 Paris (FR)
(72) Inventor: Hebbar, Abdelkrim, 91620 Nozay (FR); Picault, Jérôme, 91620 Nozay (FR); Ribiere, Myriam, 91620 Nozay (FR)
(74) Representative: Camus, Olivier Jean-Claude

(57) **Abstract**

A device (OD), intended for optimizing diffusion of information into communities of social network(s) represented by a graph, comprises:
- an analysing means (ICE) for analysing this information to determine at least one meaningful concept defining it,
- a building means (IRE) for building an ordered list of communities according to numbers of determined meaningful concepts matching respectively concepts associated to the communities of the list,
- a filtering means (FM) for defining a group of target communities as entry points for initiating the diffusion of the information, by filtering this built ordered list,
- a simulation means (DGCIS) for simulating the information diffusion on the graph (G), and
- a processing means (PM) for allowing the choice of at least one target community into the defined group from at least the simulated information diffusion, and then for diffusing the information in each chosen target community.

## Description

### Technical field

The present invention relates to diffusion of information through people networks organized as communities.

One means here by "people (or social) network", members online connected by friendly or professional links, grouped or not by sector, which promote social interaction, creation and information sharing.

Moreover, one means here by "community (or subset)" interactions of a group of members of a social network about a specific object. So, it is a kind of medium allowing persons (or users) to engage in interactions and information exchange on a specific topic, centered on a well-defined physical or multimedia object. Such a community (or subset) is generally composed of persons from different social spheres (friends, family, co-workers and strangers). Each member of a community (or subset) may be represented in virtual worlds by his user profile, i.e. a set of attributes that represents his identity and interests or a business card or a badge in the physical world. A user profile attribute can be, for instance, a declared civil status, a center of interest, or a multimedia content.

More, one means here by "interaction" any sort of activity conveying meaningful information between two or more people within a community (or subset), such as an answer to a question in a forum, a conversation, annotations, comments on an object from one person. So, a community can be represented by an object that constitutes the center of its interactions and/or the set of people interacting within it and/or the set of interactions that occurs within it.

### Background of the invention

With the development of multiple information channels (such as television, Internet and social networks), it becomes more and more difficult and costly for information providers (such as advertisers, public authorities and journalists) to identify the right channel(s) to reach the right audience. It is also difficult to measure the penetration level of information diffused through one or more channels, because this penetration level is very often correlated to the level of engagement of targeted persons. So, information providers have some difficulties to determine the return on investment at the end of an information diffusion campaign.

Several solutions have been proposed to improve the situation. A first solution consists in broadcasting information directly to a wide and non-filtered audience. But this is often considered as spamming. A second solution consists in deeply personalizing information diffusion. But this appears to be costly and very intrusive in terms of privacy (and therefore leading to a strong reluctance of the concerned persons), because it requires knowledge of individual profiles and/or individual activities, which necessitates analysis of individual person behaviors. A third solution consists in identifying influencers in a social network. But this appears to be mainly appropriate to information diffusion in a single social network but not within several communities.

So, no solution of the art helps finding the right entry point for information diffusion through people networks organized as communities.

### Summary of the invention

So, an objective of the invention is to improve the situation, and notably to allow to maximize diffusion of information in multiple communities (possibly belonging to different social networks), while minimizing the cost of propagation for information providers so that their return on investment be maximized, without exploiting directly social relationships between persons (or users).

To this effect the invention notably provides a method, intended for optimizing diffusion of information, by means of a diffusion service, into communities of social network(s), represented by a graph based on measures of similarities between interactions of community pairs, and comprising:
- a step (i) during which one analyses this information to determine at least one meaningful concept defining it,
- a step (ii) during which one builds an ordered list of communities according to numbers of determined meaningful concepts matching respectively concepts associated to the communities of this list,
- a step (iii) during which one defines a group of target communities as entry points for initiating the diffusion of the information, by filtering this built ordered list,
- a step (iv) during which one simulates the information diffusion on the graph, and
- a step (v) during which one chooses at least one target community into the defined group, from at least this simulated information diffusion, and then one diffuses the information in each chosen target community by means of the diffusion service.

So, targets are not based on person's interests but on community interactions.

The method according to the invention may include additional characteristics considered separately or combined, and notably:
- in step (ii) communities of the ordered list may be extracted from their interactions;
- in step (iv) one may simulate the information diffusion on the graph to obtain a virtual graph, then one may compute reachable communities from this virtual graph, and in step (v) one may choose each target community from these computed reachable communities;
   ➢ it may further comprise a step (vi) during which one collects service information from the communities to update the graph, and then one compares this updated graph with the virtual graph to compute a final return on investment;
      - in step (vi) one may determine an audience level from the collected service information, and, if this determined audience level is not satisfactory, one may adapt the information to be diffused;
- in step (v), before choosing each target, one may evaluate costs of the simulated information diffusion according to a grid of prices, calculated according to targets to be reached, and then one may choose each target community from this cost evaluation;
   ➢ in step (v) one may choose each target community from the cost evaluation to optimize an expected return on investment.

The invention also provides a device, intended for optimizing diffusion of information, by means of a diffusion service, into communities of social network(s), represented by a graph based on measures of similarities between interactions of community pairs, and comprising:
- an analysing means arranged for analysing this information to determine at least one meaningful concept defining it,
- a building means arranged for building an ordered list of communities according to numbers of determined meaningful concepts matching respectively concepts associated to the communities of this list,
- a filtering means arranged for defining a group of target communities as entry points for initiating the diffusion of the information, by filtering the built ordered list,
- a simulation means arranged for simulating the information diffusion on the graph, and
- a processing means arranged for allowing the choice of at least one target community into the defined group from at least the simulated information diffusion, and then for diffusing the information in each chosen target community by means of the diffusion service.

The optimization device according to the invention may include additional characteristics considered separately or combined, and notably:
- its simulation means may be arranged for simulating the information diffusion on the graph to obtain a virtual graph;
   ➢ its processing means may be arranged for computing reachable communities from the virtual graph;
   ➢ its processing means may be arranged for comparing the virtual graph with an updated graph resulting from an update of the graph, following upon the information diffusion, and for computing a final return on investment from this comparison;
- its processing means may be arranged for evaluating costs of the simulated information diffusion according to a grid of prices, calculated according to targets to be reached.

The invention also provides an (optimization) server comprising an optimization device such as the one above introduced.

### Brief description of the figures

Other features and advantages of the invention will become apparent on examining the detailed specifications hereafter and the appended drawings, wherein:
- figure 1 schematically illustrates a social network with communities (or subsets),
- figure 2 schematically and functionally illustrates a transport network to which are connected a community management system, an optimization server comprising an example of embodiment of an optimization device according to the invention, an information providing server, community servers and two user terminals,
- figure 3 schematically illustrates a dynamic graph of communities generated from the communities (or subsets) illustrated in figure 1, and
- figure 4 schematically illustrates an example of algorithm allowing implementation of an optimization method according to the invention by the communication equipements illustrated in figure 1.

### Detailed description of the preferred embodiment

The appended drawings may serve not only to complete the invention, but also to contribute to its understanding, if need be.

The invention aims, notably, at offering a method, and an associated device OD, intended for optimizing diffusion of information, by means of a diffusion service M1, into communities Subi of social network(s) Sntw, represented by a graph G based on measures of similarities between interactions I of community pairs.

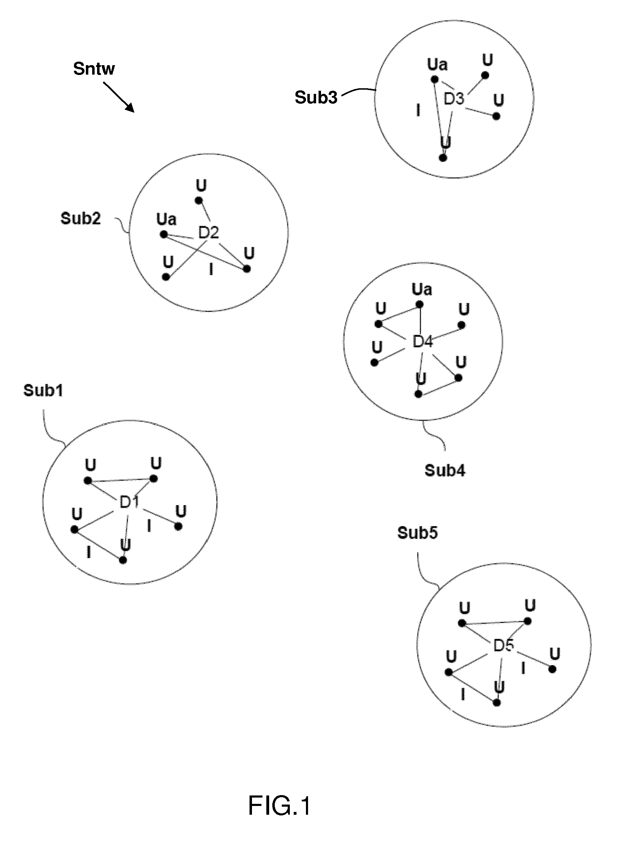

An example of social network Sntw is illustrated in figure 1. It comprises five communities (or subsets) Subi (i = 1 to 5), comprising users (or persons) U having interactions I therebetween (through their communication equipments or terminals) Tj, and each having its own description Di.

In the following description it will be considered that the user communication equipments Tj are smartphones. But the user communication equipments could be of other types (tablet-pc, laptop, computer, for instance).

Each user terminal Tj comprises an application A1 controlling access to community servers Srvi associated to the communities Subi to which belong their users Uj.

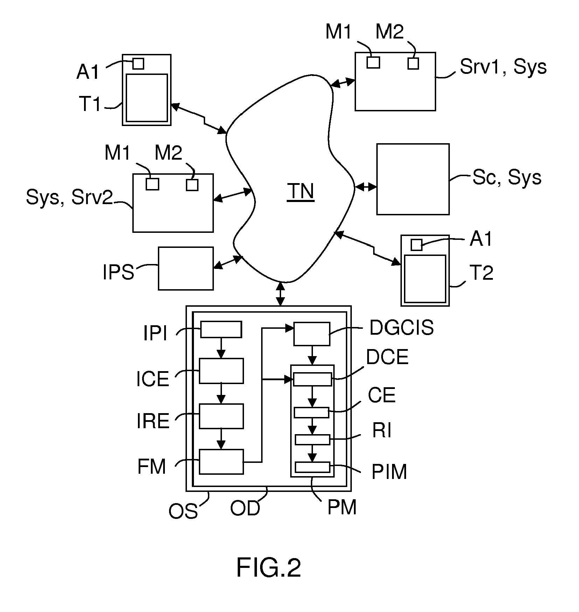

Each community Subi of a social network Sntw is represented by a graph G that is based on measures of similarities between interactions I of community pairs. This graph G is preferably generated by a system Sys such as the one partially illustrated in figure 2 and described in the European patent application whose filing number is 12151626.

To resume this system Sys (partially illustrated in figure 2) comprises a central server Sc arranged for generating graphs G and described below, and community servers Srvi (one for each community Subi), offering generic and specific services, and notably a diffusion service and a following service respectively through first M1 and second M2 modules. Such a system Sys is arranged for implementing a method intended for providing a set of services S of a first subset Sub1 of a social network Sntw to a user terminal Tj having access to a second subset Sub2 of this social network Sntw.

More precisely, this system Sys implements a method consisting in:
- constructing a graph G based on measures of the similarities between the (social) interactions I of each pair of subsets Subi, by:
   ➢ creating a node Ni for each subset Subi of the social network Sntw,
   ➢ extracting specific data Sd associated to the social interactions I within each subset Subi,
   ➢ measuring the similarities between the specific data Sd for each pair of subsets (Sub1, Sub2), and
   ➢ according to these measures, creating an edge E within the graph G with an associated weight W for each pair of subsets (Sub1, Sub2), and
- providing, to the concerned user terminal Tj, a set of services S of the first subset Sub1 to the second subset Sub2, this set of services S being chosen according to the weigh W of the edge E corresponding to the first subset Sub1 and the second subset Sub2.

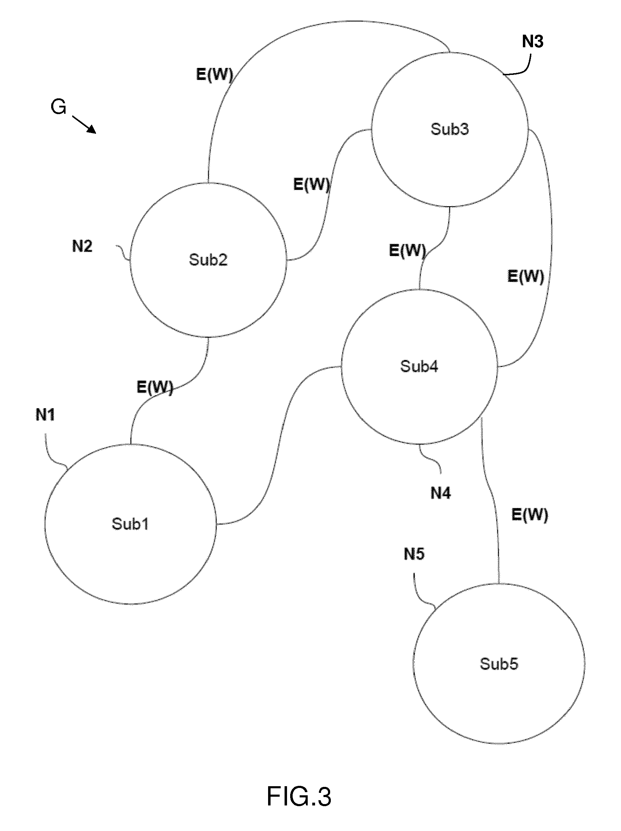

An example of graph (or dynamic graph of communities) G generated from the five communities (or subsets) Sub1 to Sub5 of figure 1 is illustrated in figure 3.

Such a dynamic graph of communities is instantiated in a way that includes at least for each community Subi the following service (M2) which allows following interactions of linked communities when their similarity is higher than a predefined threshold value. When an information is diffused (or propagated), it becomes part of the community interactions, so that there is no need to push this information directly to the remote community because the following service M2 of the linked community is automatically activated and grab this information.

The optimization method, according to the invention, comprises at least five steps (i) to (v), which may be implemented by an optimization server OS comprising an optimization device OD and connected to a transport network TN, as illustrated in figure 2.

The transport network TN can be a combination of wired and wireless networks.

The first step (i) is initiated when an information provider (for instance an advertiser) has decided to diffuse an information (possibly of a multimedia type) stored into his information providing server IPS, and therefore uses the latter (IPS) to transmit this information to the optimization server OS, through the transport network TN.

As illustrated in figure 2, the optimization server OS comprises an optimization device OD which may comprise an information provider interface IPI allowing an information providers to transmit the information to be diffused in various forms (any kind of multimedia content such as text, audio, video or any combination of them), and possibly to indicate a set of propagation rules and/or targets and/or an expected return on investment, for instance.

During this first step (i) one analyses automatically the information to be diffused to determine at least one meaningful concept defining it.

This analysis can be performed by an analysing means (or information concept extractor) ICE belonging to the optimization device OD equipping the optimization server OS.

This information concept extractor ICE is a module capable of extracting high level semantic concepts after having analyzed an information content. This kind of module is well-known in the art. It may act for all multimedia-based information, if necessary. An example of image analyzer is ALIPR ("Automatic Photo Tagging and Visual Image Search"), available at http://www.alipr.com. An example of video analyzer is described in a web page accessible at the address: http://www.cecs.uci.edu/-papers/icme05/defevent/papers/cr1324.pdf.

In the second step (ii) of the method, one builds an ordered list of communities according to numbers of determined meaningful concepts matching respectively concepts associated to the communities Subi of this list.

This ordered list can be built by a building means (or information relevance estimator) IRE belonging to the optimization device OD. The communities Subi of the ordered list may be extracted from their interactions.

This information relevance estimator IRE is a module capable of computing the relevance of an information for a community Subi. It may cover many kinds of relevant criteria defined by the information provider. For instance, it may compute a kind of relevance level based on a first criterion (% of concepts of an information that are in a given community Subi) and on a second criterion (degree of semantic similarity between an information and a given community Subi). The combination of these two criteria can be used to define policies for information diffusion (or propagation). For instance, if the first and second criteria are both high, there will have probably no surprise effects (little opportunity to change the structure of dynamic graph of communities G). But if the first criterion is low whereas the second criterion is high, one specific facet of the information is very pertinent for the considered community Subi, and this will offer a stronger opportunity of new links with other communities Subi' (i' ≠ i).

In the third step (iii) of the method, one defines a group of target communities as entry points for initiating the diffusion of the information, by filtering the ordered list built in the second step (ii).

This group of target communities can be defined by a filtering means FM belonging to the optimization device OD. The filter may be defined by one or more rules defined by the concerned information provider and transmitted to the optimization server OS by means of his information providing server IPS.

In the fourth step (iv) of the method, one simulates the information diffusion on the graph G.

This simulation can be performed by a simulation means (or dynamic graph of communities impact simulator) DGCIS belonging to the optimization device OD.

This simulation means DGCIS is a module that may compute and simulate the impact on the structure of the dynamic graph of communities G of the introduction of the information (to be diffused) in specific communities targeted from the results delivered by the information relevance estimator IRE. To this effect, it may simulate the information diffusion on the dynamic graph of communities G to obtain a virtual graph VG.

In the fifth step (v) of the method, one chooses (or selects) at least one target community into the defined group from at least the simulated information diffusion, and then one diffuses the information in each chosen target community by means of the diffusion service M1 offered by its community server Srvi.

This choice can be performed either by the information provider and a processing means PM belonging to the optimization device OD, or by the only processing means PM.

This processing means PM may comprise a first module (or diffusion capability estimator) DCE that maybe, for instance, capable of computing the number of reachable communities in the virtual graph VG. More precisely, it may calculate the reachable communities based on a depth-first traversal of graphs associated to the virtual graph VG resulting from the DGCIS simulation. For example, when traversing the virtual graph VG, a community is considered as candidate to be a potential reachable target after a DGCIS simulation, if the similarity level with any community used as diffusion entry point of the information, is higher than a pre-defined threshold, for instance defined by the information provider.

The processing means PM may also comprise a second module (or cost estimator) CE that takes into account at least one parameter, i.e. the number of reachable communities, for evaluating costs of the simulated information diffusion according to a grid of prices, calculated according to targets to be reached defined by the information provider. For instance, the cost estimator CE may choose each target community from the cost evaluation, in order to optimize an expected return on investment defined by the information provider.

The processing means PM may also comprise a third module (or result Interface) RI intended for displaying the results of the information diffusion and associated explanations for the information provider.

The processing means PM may also comprise a fourth module (or push information module) PIM intended for pushing the information near the diffusion services M1 of the community servers Srvi associated respectively to the communities Subi targeted and selected, so that they control the diffusion of information near the terminals Tj of their users Uj.

The method according to the invention may further comprise a sixth step (vi) during which one collects service information from the communities Subi (and more precisely from the following service M2 of their respective community servers Srvi) to update the graph G, and then one compares this updated graph with the virtual graph VG to compute a final return on investment.

The collection of service information and the graph update can be performed by the system Sys described in the above cited European patent application whose filing number is 12151626, and more precisely by its central server Sc.

The comparison of the updated graph with the virtual graph VG and the following computation of the final return on investment may be performed by the processing means PM, and more precisely by its cost estimator CE.

During the sixth step (vi) one may also determine an audience level from the collected service information, and, if this determined audience level is not satisfactory, one may adapt the initial information before proceeding to a new diffusion.

The determination of the audience level may be performed by the processing means PM, and more precisely by its cost estimator CE.

The adaptation of the initial information can be done by the information provider, or by the processing means PM and then controlled by the information provider.

It is important to note that the optimization device OD can be made of software modules (or a computer program product). But it may be also made of a combination of software modules and electronic circuit(s) or hardware modules.

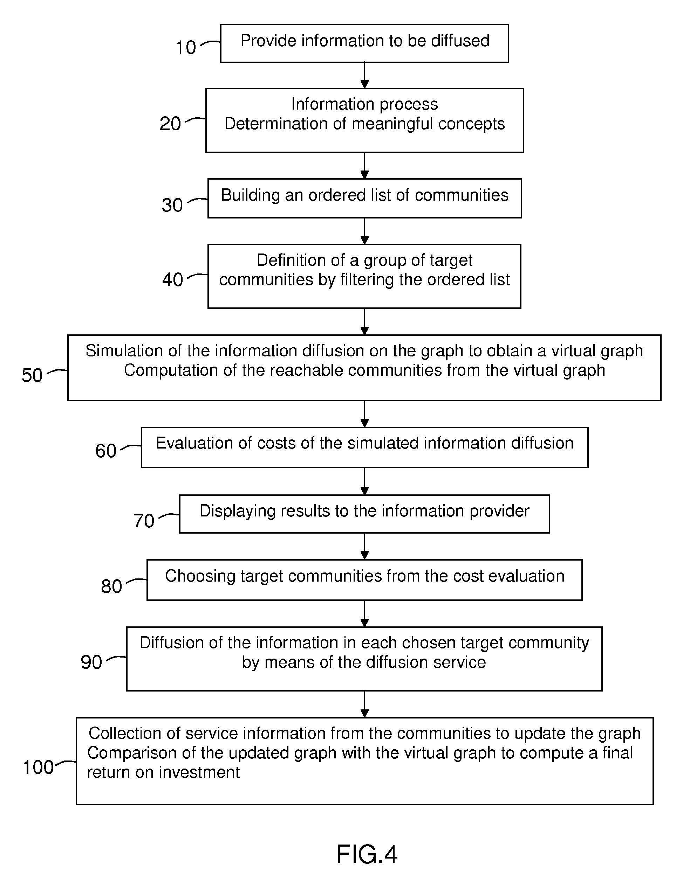

A non-limiting example of algorithm, allowing implementation of the optimization method by the equipments Sc, Srvi, Tj, OS and OD sketched in figure 2, is illustrated in figure 4.

The algorithm starts in a step 10 during which an information provider transmits an information to the optimization server OS, through the transport network TN, by means of his information providing server IPS.

Then, in a step 20, the optimization device OD processes the received information to determine meaningful concept(s). This step 20 corresponds to the first step (i) of the optimization method.

Then, in a step 30, the optimization device OD builds an ordered list of communities from the graph G according to numbers of determined meaningful concepts matching respectively concepts associated to the communities Subi of this list. This step 30 corresponds to the second step (ii) of the optimization method.

Then, in a step 40, the optimization device OD defines a group of target communities as entry points for initiating the diffusion of the information by filtering the ordered list built in step 30. This step 40 corresponds to the third step (iii) of the optimization method.

Then, in a step 50, the optimization device OD simulates the information diffusion on the graph G, preferably for obtaining a virtual graph VG. This step 50 corresponds to the fourth step (iv) of the optimization method.

Then, in a step 60, the optimization device OD evaluates information diffusion costs according to a grid of prices calculated according to targets to be reached.

Then, in a step 70, the optimization device OD displays the results of the information diffusion and associated explanations for the information provider.

Then, in a step 80, the information provider and/or the optimization device OD choose(s) at least one target community as entry point into the defined group from at least the simulated information diffusion and the evaluated information diffusion costs. This choice can be done for optimizing an expected return on investment.

Then, in a step 90, the optimization device OD, in combination with the diffusion services M1 of the community servers Srvi of the chosen target communities Subi, diffuse the received information in these chosen target communities Subi. Steps 60 to 90 correspond to the fifth step (v) of the optimization method.

Then, in a step 100, one may measure the real impact of the information diffusion. More precisely, the central server SC of the system Sys collects service information from the communities Subi (and more precisely from the follow service M2 of their respective community servers Srvi) to update the graph G. Indeed, introduction of the received information in a chosen (or selected) community Subi induces a social interaction I. In fact, this information will be displayed on the screens of the terminals Tj of all the users Uji participating to this community Subi, and thanks to the graph update mechanism above mentioned, this triggers an update of the initial graph G. As a consequence, and thanks to the following service M2 provided by each community server Srvi, the pushed information is also automatically followed by communities linked to those belonging to the chosen target communities and then begins to diffuse across the graph G, so that all users of these communities be warned by the introduced information.

Then the optimization device OD may compare the updated graph with the virtual graph VG to compute a final return on investment. Thus, the information provider may compare this final return on investment with the expected one.

Let us note that during step 100 the optimization device OD may also determine an audience level from the collected service information, and display this audience level for the information provider. So, if this determined audience level does not satisfy the information provider, he may adapt the initial information before proceeding to a new diffusion in the target communities chosen in step 80 or in new target communities obtained by applying again steps 10 to 80.

This step 100 corresponds to the possible sixth step (vi) of the optimization method.

This invention offers several advantages, and notably:
- it preserves privacy, because it is based on community interactions but not on user profiles,
- it enables information providers to take into account new criteria (such as diffusion cost per community, number of connected communities or strength of links) before triggering a diffusion campaign, in order to optimize return on investment,
- it allows information providers to take benefits from new functionalities such as passive information diffusion mode, optimization of propagation cost by choosing a set of pertinent user communities as entry points of information diffusion, simulating potential results before deciding, or measuring real impact of information diffusion,
- it allows enhancing recommendation propagation chains by exploiting communities centered on an object of common interest(s).

The invention is not limited to the embodiments of optimization method, optimization device and optimization server described above, only as examples, but it encompasses all alternative embodiments which may be considered by one skilled in the art within the scope of the claims hereafter.

## Claims

1. Method for optimizing diffusion of information, by means of a diffusion service (M1), into communities (Subi) of social network(s) (Sntw), represented by a graph (G) based on measures of similarities between interactions (I) of community pairs, and comprising:
- a step (i) during which one analyses said information to determine at least one meaningful concept defining it,
- a step (ii) during which one builds an ordered list of communities according to numbers of determined meaningful concepts matching respectively concepts associated to the communities (Subi) of said list,
- a step (iii) during which one defines a group of target communities as entry points for initiating the diffusion of said information, by filtering said built ordered list,
- a step (iv) during which one simulates said information diffusion on said graph (G), and
- a step (v) during which one chooses at least one target community into said defined group from at least said simulated information diffusion, and then one diffuses said information in each chosen target community by means of said diffusion service (M1).

2. Method according to claim 1, wherein in step (ii) said communities (Subi) of said ordered list are extracted from their interactions.

3. Method according to one of claims 1 and 2, wherein in step (iv) one simulates said information diffusion on said graph (G) to obtain a virtual graph (VG), then one computes reachable communities from said virtual graph (VG), and in step (v) one chooses each target community from said computed reachable communities.

4. Method according to claim 3, wherein it further comprises a step (vi) during which one collects service information from said communities (Subi) to update said graph (G), and then one compares said updated graph with said virtual graph (VG) to compute a final return on investment.

5. Method according to claim 4, wherein in step (vi) one determines an audience level from said collected service information, and, if said determined audience level is not satisfactory, one adapts said information to be diffused.

6. Method according to one of claims 1 to 5, wherein in step (v) before choosing each target one evaluates costs of said simulated information diffusion according to a grid of prices, calculated according to targets to be reached, and then one chooses each target community from said cost evaluation.

7. Method according to claim 6, wherein in step (v) one chooses each target community from said cost evaluation to optimize an expected return on investment.

8. Device (OD) for optimizing diffusion of information, by means of a diffusion service (M1), into communities (Subi) of social network(s) (Sntw), represented by a graph (G) based on measures of similarities between interactions of community pairs, said device (OD) comprising:
- an analysing means (ICE) arranged for analysing said information to determine at least one meaningful concept defining it,
- a building means (IRE) arranged for building an ordered list of communities according to numbers of determined meaningful concepts matching respectively concepts associated to the communities of said list,
- a filtering means (FM) arranged for defining a group of target communities as entry points for initiating the diffusion of said information, by filtering said built ordered list,
- a simulation means (DGCIS) arranged for simulating said information diffusion on said graph (G), and
- a processing means (PM) arranged for allowing the choice of at least one target community into said defined group from at least said simulated information diffusion, and then for diffusing said information in each chosen target community by means of said diffusion service (M1).

9. Device according to claim 8, wherein said simulation means (DGCIS) is arranged for simulating said information diffusion on said graph (G) to obtain a virtual graph (VG).

10. Device according to claim 9, wherein said processing means (PM) is arranged for computing reachable communities from said virtual graph (VG).

11. Device according to one of claims 9 and 10, wherein said processing means (PM) is arranged for comparing said virtual graph (VG) with an updated graph resulting from an update of said graph (G), following upon said information diffusion, and for computing a final return on investment from said comparison.

12. Device according to one of claims 8 to 11, wherein said processing means (PM) is arranged for evaluating costs of said simulated information diffusion according to a grid of prices, calculated according to targets to be reached.

13. Server (OS), wherein it comprises a device (OD) according to one of claims 8 to 12.
